Europäisches Patentamt

European Patent Office

Office européen des brevets

(19)

(11) Veröffentlichungsnummer : **0 060 347**
**B1**

(12) ## EUROPÄISCHE PATENTSCHRIFT

(45) Veröffentlichungstag der Patentschrift :
17.07.85

(51) Int. Cl.⁴ : **B 01 D 29/00**

(21) Anmeldenummer : 81110613.7

(22) Anmeldetag : 18.12.81

(54) **Fuss für eine Druckfiltrationszelle.**

(30) Priorität : 12.03.81 DE 3109471

(43) Veröffentlichungstag der Anmeldung :
22.09.82 Patentblatt 82/38

(45) Bekanntmachung des Hinweises auf die Patenterteilung : 17.07.85 Patentblatt 85/29

(84) Benannte Vertragsstaaten :
CH FR LI

(56) Entgegenhaltungen :
DE-A- 2 453 445
DE-C-    20 122
US-A- 2 440 487
US-A- 3 173 868
US-A- 3 360 128
US-A- 3 743 096
US-A- 3 838 978
US-A- 4 247 399

(73) Patentinhaber : Carl Schleicher & Schüll GmbH & Co.
KG
Grimsehlstrasse 23
D-3352 Einbeck (DE)

(72) Erfinder : Hein, Wolfgang, Dr. Chem.
Hahnestrasse 9
D-3354 Dassel (DE)

(74) Vertreter : Jaeger, Klaus, Dr. et al
JAEGER & PARTNER Patentanwälte Bergstrasse 48
1/2
D-8035 München-Gauting (DE)

EP 0 060 347 B1

## Beschreibung

Die Erfindung betrifft einen Fuß für eine Druckfiltrationszelle der im Oberbegriff des Anspruchs 1 genannten Art.

Speziell betrifft die Erfindung einen Fuß für kleinere Druckfiltrationszellen, die bei einem Volumen des Aufgußraumes im Bereich von ungefähr 5 bis 500 ml für den Betrieb mit Magnetrührrung konzipiert sind.

Druckfiltrationszellen der genannten Art sind üblicherweise im wesentlichen dreiteilige stehende zylindrische Druckgefäße, die im wesentlichen aus einem Oberteil, einem Mittelteil und einem Unterteil bestehen. Das zylindrische Mittelteil bildet den Aufgußraum. Die Oberseite des Aufgußraumes ist mit einem Oberteil druckdicht verschließbar. Im Oberteil sind in der Regel Öffnungen zur Druckbeaufschlagung der Zelle, genauer gesagt zur Druckbeaufschlagung des Aufgußraumes, sowie zur Aufgabe des Zulaufs, also des zu behandelnden Mediums, vorgesehen. Die Unterseite des zylindrischen Mittelteils ist druckdicht mit dem Unterteil der Druckfiltrationszelle verbindbar, das in aller Regel als Fuß ausgebildet ist, um der Druckfiltrationszelle eine freie Standfähigkeit zu verleihen. Auf der Oberseite des Unterteils der Druckfiltrationszelle ist ein Filterträger angeordnet, auf dem das Filter, meist eine Membran, aufliegt. Beim Verbinden des Mittelteils mit dem Unterteil wird das Filter zwischen beiden Teilen druckdicht eingespannt.

Im Unterteil der so aufgebauten gebräuchlichen Druckfiltrationszellen ist ein Ablauf- oder Sammelraum für das Filtrat ausgebildet, aus dem das ablaufende Filtrat zu einem am Unterteil der Druckfiltrationszelle ausgebildeten Filtratablaufstutzen geführt wird. Bei einer Art der bekannten Druckfiltrationszellen ist dieser Filtratablaufstutzen auf der Unterseite des Unterteils axial abwärts vorspringend ausgebildet, wobei die Standfähigkeit des Gerätes durch periphere Füße hergestellt wird. Der Filtratablaufstutzen ist als Schlaucholive ausgebildet, auf die ein Filtratablaufschlauch aufgezogen ist.

Bei der anderen aus der Praxis bekannten Art von Druckfiltrationszellen ist der Filtratablaufstutzen als radial vorspringende Schlaucholive ausgebildet und steht ebenfalls direkt mit dem Filtratsammelraum im Unterteil der Druckfiltrationszelle in Verbindung.

Die bekannten Druckfiltrationszellen sind umständlich in der Handhabung. Beim Trennen des Filtratablaufsystems von der Zulaufseite, also vom Aufgußraum, muß stets das Unterteil vom Mittelteil der Druckfiltrationszelle getrennt werden, muß also stets der Aufgußraum auf seinem gesamten Querschnitt geöffnet werden. Da im Aufgußraum jedoch meist Reste der Trübe verbleiben, kann das Öffnen der Druckfiltrationszelle und damit das Trennen vom Filtratablaufsystem nur über einem Auffangbecken erfolgen. Dies zwingt jedoch dazu, auch das gesamte Filtratablaufsystem über das Auffangbecken mitzunehmen oder den Filtratablaufschlauch vom Filtratablaufstutzen am Unterteil der Druckfiltrationszelle zu lösen. Das ständige Lösen und Wiederverbinden des Filtratablaufschlauches mit dem Filtratablaufstutzen bewirkt eine zunehmende Lockerung dieser elastisch vorgespannten Verbindung und führt damit zu der Gefahr des Abspringens und Undichtwerdens der Schlauchverbindung im Filtratablaufweg.

Druckfiltrationszellen der genannten Art sind in aller Regel für eine Magnetrührung ausgelegt. Im Inneren des Aufgußraumes ist ein Magnetrührer frei oder gelagert angeordnet, der von einer Rührplatte angetrieben wird, auf die die Druckfiltrationszelle gestellt wird. Dabei ist aus Gründen einer effektiven Ankopplung der Rührabstand zwischen dem Magnetrührer und der Rührplatte so gering wie möglich zu halten. Diese Forderung führt naturgemäß bei den Druckfiltrationszellen zu Problemen, bei denen der Filtratablaufstutzen axial an der Unterseite des Unterteils der Druckfiltrationszelle angebracht ist. Bei direktem Anschluß des Filtratablaufschlauches an den Filtratablaufstutzen und dem Bestreben, den Abstand zwischen der Unterkante des Filtratablaufstutzens und der Oberfläche der Rührplatte so gering wie möglich zu halten, besteht die Gefahr, daß der Schlauch entweder abknickt und/oder von der Schlaucholive abspringt oder diese Schlauchverbindung undicht wird. Beim Einfügen von Kniestücken statt einer direkten Schlauchverbindung müssen zusätzliche Verbindungsstellen und damit Leckstellen in der Filtratleitung in Kauf genommen werden. Daß dennoch Druckfiltrationszellen mit axial abwärts gerichtetem Filtratablaufstutzen mit großem Erfolg in der Praxis eingeführt sind, liegt daran, daß solche Druckfiltrationszellen insbesondere bei kleinerer Bauart auch für den nicht gerührten und nicht ortsgebundenen Handbetrieb in Verbindung mit einer Luftpumpe als Druckquelle geeignet sind, beispielsweise auf dem Gebiet des Umweltschutzes. Für diese Betriebsart sind die vorstehend beschriebenen Druckfiltrationszellen mit radial im Zellenunterteil angebrachten Filtratablaufstutzen weniger geeignet. Diese Geräte sind vielmehr von vornherein als reine Standgeräte konzipiert.

Angesichts dieses Standes der Technik liegt der Erfindung die Aufgabe zugrunde, einen Fuß für eine Druckfiltrationszelle zu schaffen, der unter Wahrung der Vorteile einer Druckfiltrationszelle mit axialem Filtratablauf für den nicht stationären Handbetrieb den sicheren und in der Handhabung bequemen und leichten Betrieb solcher Druckfiltrationszellen als Standgeräte, insbesondere auch für den Magnetrührbetrieb, unter Einhaltung kleiner Rührabstände, ermöglicht.

Zur Lösung dieser Aufgabe wird ein Fuß der eingangs genannten Art geschaffen, der erfindungsgemäß die im kennzeichnenden Teil des Anspruchs 1 genannten Merkmale aufweist.

Die Erfindung schafft also einen Fuß für eine Druckfiltrationszelle, der nicht selbst Bestandteil der Druckfiltrationszelle ist, also weder einen Filterhalter oder Filterträger aufweist noch in irgendeiner Weise den Druckraum oder Aufgußraum einer Druckfiltrationszelle begrenzt oder druckdicht verschließt. Vielmehr weist der standfeste Fuß auf seiner Oberseite Anschlußmittel auf, die dem dichten Anschluß eines axialen Filtratablaufstutzens einer gebräuchlichen Druckfiltrationszelle dienen. Von diesem Stutzen führt ein in dem starren Fuß ausgebildeter Verbindungskanal zu einem seitlich angeordneten Filtratablaufstutzen des Fußes. Der Fuß ermöglicht eine starre und standfeste Verbindung zu einer aufgesetzten und angeschlossenen Druckfiltrationszelle und ermöglicht eine flache radiale Abführung des Filtrats, ohne daß ein Abknicken oder ein Undichtwerden der aus axialer Richtung in radiale Richtung umgelenkten Filtratablaufleitung auch bei kleinsten Rührabständen zu befürchten ist. Außerdem kann die Druckfiltrationszelle jederzeit vom Anschlußstutzen gelöst und abgenommen werden, ohne daß der Aufgußraum oder Druckraum der Druckfiltrationszelle geöffnet zu werden braucht und ohne daß der Filtratablaufstutzen und das angeschlossene Filtratablaufsystem vom Filtratablaufstutzen des Fußes gelöst zu werden braucht. Dadurch wird die praktische Handhabung der Druckfiltrationszelle auch bei Standbetrieb und Magnetrührung wesentlich erleichtert.

Um den Fuß nicht nur für den Standbetrieb eines einzigen Typs bzw. einer einzigen Größe einer Druckfiltrationszelle einsetzen zu können, ist der auf der Oberseite des Körpers des Fußes angebrachte Anschlußstutzen sowohl auf seiner Innenseite als auch auf seiner Außenseite mit Anschlußelementen oder Verbindungselementen zur Herstellung fester dichter und starrer Verbindungen zwischen einer Druckfiltrationszelle und dem Fuß versehen. Solche Verbindungselemente sind beispielsweise Schraubgewinde zur Herstellung von Schraubverbindungen, Rastelemente zur Herstellung von Bajonettverbindungen, Konusflächen zur Herstellung von Steckverbindungen oder kombinierte Kopplungselemente, beispielsweise für einen sogenannten Luer-Lock. Druckfiltrationszellen mit kleineren Durchmessern und dementsprechend kleineren Filtratablaufstutzen sind für einen Anschluß in Verbindung mit den innen im Anschlußstutzen des Fußes vorgesehenen Verbindungselementen bestimmt, während Druckfiltrationszellen mit größeren Durchmessern und entsprechend größer ausgebildeten Filtratablaufstutzen für den Anschluß und den Eingriff in die außen auf dem Anschlußstutzen des Fußes angebrachten Verbindungselemente bestimmt sind. Selbstverständlich können die Druckfiltrationszellen auch unter gemeinsamen Angriff an die innen und außen am Anschlußstutzen des Fußes angebrachten Verbindungselemente mit dem Fuß verbunden werden. Auf diese Weise kann der Fuß also für Druckfiltrationszellen unterschiedlicher Größen verwendet werden, insbesondere für die Unterteile solcher Druckfiltrationszellen, die üblicherweise nicht für den Standbetrieb, sondern für den nicht stationären Handbetrieb konzipiert sind. Dadurch wird die Verwendbarkeit der Druckfiltrationszellen mit axialem Filtratablauf vielseitiger, also kostensparender gestaltet. Beispielsweise können flache, als Spritzenvorsätze verwendete Filtrationszellen durch Zwischenfügen von zylindrischen Abschnitten zu zylindrischen Druckfiltrationszellen mit vergrößerten Druckräumen umgestaltet und durch Aufstecken auf den Fuß der Erfindung als Standgeräte, nach Einbringen eines Rührkerns und Aufsetzen auf eine Rührplatte sogar als Standgeräte für Magnetrührung, betrieben werden. Mit anderen Worten ermöglicht also der Fuß der Erfindung den Aufbau eines sowohl für den stationären Magnetrührbetrieb als auch für den nicht stationären ungerührten Handbetrieb geeigneten Druckfiltrationssystems in Modultechnik.

Die Erfindung ist im folgenden an Hand eines Ausführungsbeispiels in Verbindung mit der Zeichnung näher beschrieben. Es zeigt die einzige Figur, nämlich die

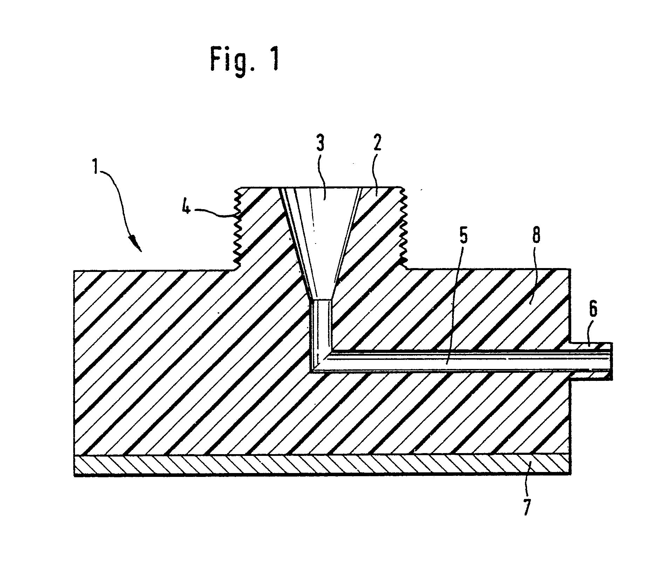

Figur 1 eine Seitenschnittansicht eines Ausführungsbeispiels des Fußes für eine Druckfiltrationszelle.

Der in Fig. 1 gezeigte Fuß 1 für eine Druckfiltrationszelle weist im wesentlichen einen flachen Körper 8, einen sowohl innen als auch außen mit Verbindungselementen 3, 4 versehenen Anschlußstutzen 2 zur flüssigkeitsdichten Verbindung des Fußes 1 mit Druckfiltrationszellen verschiedener Größen, einen seitlich angeordneten Ablaufstutzen 6 und einen den Anschlußstutzen 2 und den Ablaufstutzen 6 verbindenden Durchlaßkanal 5 auf. Bei dem gezeigten Ausführungsbeispiel weist der Anschlußstutzen 2 zwei Anschlußmöglichkeiten auf. Durch eine konisch ausgebildete, sich nach unten verjüngende Innenbohrung 3 werden komplementär ausgebildete Filtratablaufstutzen von kleineren Druckfiltrationszellen durch einfaches Aufstecken fest mit dem Fuß 1 verbunden. Bei größeren Druckfiltrationszellen erfolgt der Anschluß über ein Außengewinde 4 des Anschlußstutzens 2. Die konische Innenbohrung 3 des Anschlußstutzens 2 ist über einen Durchlaßkanal 5 mit dem seitlich angeordneten Filtratablaufstutzen 6 verbunden. Der Fuß 1 kann beispielsweise aus einem gebräuchlichen Hartkunststoff bestehen. Zur Erhöhung der Standfestigkeit des Fußes 1 ist dieser mit einem Boden 7 versehen, der im Vergleich zum Körper 8 des Fußes 1 aus einem Material mit wesentlich höherem spezifischen Gewicht besteht. Das Material des Körpers 8 kann aus Gründen der Materialersparnis Hohlräume aufweisen und der Boden 7 muß sich nicht notwendigerweise über die gesamte Standfläche des Fußes erstrecken. Der Fuß 1 kann beispielsweise einen rechteckigen oder zylindrischen Querschnitt aufweisen. Die Druckfiltrationszelle kann auch über ein Ventil oder einen Mehrwegehahn mit dem Anschlußstutzen 2 des Fußes 1 verbunden sein.

**Patentansprüche**

1. Fuß für eine Druckfiltrationszelle in Form eines flachen scheiben- oder quaderförmigen Körpers mit einem an der Seite des Körpers angeordneten Filtratablaufstutzen, gekennzeichnet durch einen auf der Oberseite des Körpers (8) angeordneten und sowohl innen als auch außen mit Verbindungselementen (3, 4) versehenen Anschlußstutzen (2) zur starren und dichten Verbindung des Fußes (1) mit dem Filtratstutzen einer Druckfiltrationszelle und durch einen den Anschlußstutzen (2) und den Filtratablaufstutzen (6) verbindenden Durchlaßkanal (5).

2. Fuß nach Anspruch 1, dadurch gekennzeichnet, daß die Verbindungselemente (3, 4) als Schraubverbindung, Bajonettverbindung, Luer-Lock oder Steckverbindung ausgebildet sind.

3. Fuß nach einem der Ansprüche 1 oder 2, dadurch gekennzeichnet, daß der Anschlußstutzen (2) innen und außen verschiedene Typen von Verbindungselementen (3, 4) trägt.

4. Fuß nach einem der Ansprüche 1 bis 3, dadurch gekennzeichnet, daß der Körper (8) einen beschwerten Boden (7) aufweist.

**Claims**

1. Support for a pressure filter cell in the form of a flat disk-shaped body or a body of rectangular configuration having a filtrate outlet passage located on the side of the body, characterized by a joining (2) being located on the top side of the body (8) and having inner and outer fastening elements (3, 4) for rigidly and tightly connecting the support (1) to the filtrate connection of a pressure filter cell, and by a passage (5) connecting the joining (2) with the filtrate outlet passage (6).

2. Support according to claim 1, characterized in that the fastening elements (3, 4) are formed as bolded fastenings, bayonet fastenings, as luer-lock or as fitting in.

3. Support according to claim 1 or 2, characterized in that the joining (2) supports fastening elements (3, 4), which are of different type inside and outside.

4. Support according to one of claims 1 to 3, characterized in that the body (8) has a weighted bottom (7).

**Revendications**

1. Support pour une cellule filtrante à pression, ayant la forme d'un corps plat parallélépipédique ou en plaque et comportant une tubulure d'évacuation du filtrat placée sur le côté du corps, caractérisé en ce qu'il comprend une tubulure de raccord (2) ménagée sur le côté supérieur du corps (8) et munie, à l'intérieur comme à l'extérieur, d'éléments de liaison (3, 4), permettant la liaison rigide et étanche du support (1) avec la tubulure pour filtrat d'une cellule filtrante à pression et un conduit de passage (5), reliant la tubulure de raccord (3) et la tubulure (6) d'évacuation du filtrat.

2. Support selon la revendication 1, caractérisé en ce que les éléments de liaison (3, 4) sont des liaisons par vissage, à baïonnette, par « luer-lock » ou par emboîtement.

3. Support selon l'une des revendications 1 ou 2, caractérisé en ce que la tubulure de raccord (2) comporte, à l'intérieur et à l'extérieur, différents types d'éléments de liaison (3, 4).

4. Support selon l'une des revendications 1 à 3, caractérisé en ce que le corps (8) comporte un fond alourdi (7).

Fig. 1